# EUROPEAN PATENT SPECIFICATION

(11) **EP 2 335 493 B1**
(45) Date of publication and mention of the grant of the patent: **18.02.2015**
(21) Application number: 10195205.9
(22) Date of filing: 15.12.2010
(51) Int. Cl.: A23G 9/06, A23G 9/14, A23G 9/24, A23G 9/48

(54) **Particulate frozen confection**
Partikelförmiges gefrorenes Konfekt
Confiserie surgelée particulaire

(30) Priority: 21.12.2009 EP 09180211
(43) Date of publication of application: 22.06.2011
(73) Proprietor: Unilever PLC, London, Greater London EC4Y 0DY (GB); Unilever N.V., 3013 AL Rotterdam (NL)
(72) Inventor: Burns, Ian, William, Bedford, Bedfordshire MK44 1LQ (GB); Williams, Andrea, Bedford, Bedfordshire MK44 1LQ (GB); Zhu, Shiping, Bedford, Bedfordshire MK44 1LQ (GB)
(74) Representative: Keenan, Robert Daniel

(56) References cited:
- EP-A1- 1 075 794
- EP-A1- 2 039 253
- WO-A2-2007/066178
- US-A- 6 025 003
- US-A1- 2005 100 640

## Description

### Technical Field of the Invention

The present invention relates to frozen confections comprising discrete frozen particles.

### Background to the Invention

Frozen confections consisting of discrete particles of water ice and / or ice cream are popular products. For example US 5,126,156 describes a method for preparing a free-flowing, frozen dairy product in which beads of product are prepared by dripping a mix into a freezing chamber. Similarly, EP 1 348 341 discloses a frozen ice confection comprising ice particles, said confection having a total solids content of from 4% to 10% by weight. Nonetheless there is always a need for new and improved products.

### Brief Description of the Invention

We have now devised a new type of particulate frozen confection product. Accordingly, in a first aspect, the present invention provides a frozen confection comprising frozen particles having an average diameter of from 1 to 10mm and comprising from 1 to 50 wt% of an oil-based core and from 50 to 99 wt% of a frozen aqueous shell.

Preferably the frozen aqueous shell is a water ice.

Preferably the oil-based core comprises an oil selected from coconut oil, palm oil, palm kernel oil, cocoa butter, milk fat, sunflower oil, safflower oil, olive oil, linseed oil, soybean oil, rapeseed oil, groundnut oil and mixtures, fractions or hydrogenates thereof.

Preferably the core constitutes from 5 to 40 wt% of the particles, more preferably from 10 to 30 wt%, such as about 20 wt%.

In one embodiment the aqueous shell contains an ingredient which can react with another ingredient which is contained in the oil-based core.

Preferably the particles have an average diameter of between 2 and 7 mm.

In one embodiment the oil based core is a chocolate or a chocolate analogue. In another embodiment the oil based core is a water-in-oil emulsion.

In one embodiment, the aqueous shell is an oil-in-water emulsion.

In one embodiment each particle has one core having a diameter of from 1 to 4mm. In another embodiment, each particle has more than one core.

The particles can be produced by means of a simple process. Accordingly, in a second aspect, the present invention provides a process for preparing a particulate frozen confection according to the first aspect of the invention, the process comprising:
(a) providing a dispensing device having an inner nozzle and an outer nozzle which surrounds the inner nozzle;
(b) supplying an aqueous mix to the outer nozzle and an oil-based mix to the inner nozzle, thereby forming particles with a water-continuous shell and an oil-continuous core, and then
(c) dropping the particles into a refrigerant to freeze the water-continuous shell.

### Detailed Description of the Invention

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, H.D. Goff and R.W. Hartel, Kluwer Academic / Plenum Publishers, New York 2003.

The inventors have devised a new type of frozen particle having a core /shell structure with an oil-based core and a frozen aqueous shell. The present inventors have also identified a process for producing these particles.

The aqueous mix from which the shell is produced is water-continuous. Hence the aqueous shell is also water continuous, although of course in the frozen shell, much of the water is in the form of ice. The aqueous mix is a solution and / or suspension of other ingredients, especially those typically used in frozen confections, such as sugars, fats, proteins, emulsifiers, stabilisers, colours, flavours etc. Thus the aqueous mix may be a water ice mix which typically comprises water and one or more of sugars, stabilisers, colours and flavours, but little or no fat or protein. Alternatively, the aqueous mix (and hence the shell) may be an oil-in-water emulsion, such as an ice cream mix, which contains small emulsified fat droplets (i.e. 50µm or less in diameter, preferably smaller than 10µm). The aqueous mix may be aerated or unaerated. Preferably the mix is unaerated. Preferably also the mix is a water-ice mix, so that it contains less than 5 wt% fat, preferably less than 2 wt% fat.

Even when the aqueous mix is not an oil-in-water emulsion, it may nonetheless contain surface active proteins, e.g. milk proteins, soy protein, egg protein, or low molecular weight emulsifiers, e.g. mono-/di-glycerides, Tweens, sucrose esters, diacetyl tartaric acid esters of monoglycerides (such as DATEM), citric acid esters of monoglycerides, polyglycerol esters (such as PGE 55, a polyglycerol ester of fatty acids, available from Danisco), stearoyl lactylates, lactic acid esters, acetic acid esters and propylene glycol esters. Preferably the emulsifier is water-soluble. Surface active proteins and / or emulsifiers that are dissolved in the aqueous mix can help to encapsulate the oil-continuous core, especially when the phase volume of the core is relatively high.

The aqueous mix may contain an ice structuring protein (ISP). Ice structuring proteins are proteins that can influence the shape and size of the crystals of ice formed when freezing does occur, and inhibit recrystallisation of ice (Clarke et al., 2002, Cryoletters 23: 89-92; Marshall et al., Ice Cream, 6th Edition, ibid.). Many of these proteins were identified originally in organisms that live in sub-zero environments and are thought to protect the organism from the deleterious effects of the formation of ice crystals in the cells of the organism. For this reason ice structuring proteins are also known as antifreeze proteins (AFPs). In the context of the present invention, an ISP is defined as a protein that has ice recrystallisation inhibitory activity. Suitable ISPs are described for example in EP 1886579. Preferably the ISP is a type III ISP, more preferably HPLC 12, as described in WO97/02343. ISPs can help to prevent the frozen particles from sticking to each other during storage, and thereby keep the particles free-flowing.

The aqueous mix may contain a calcium salt, for example calcium sulphate, and / or a source of phosphate ions. Adding calcium and / or phosphate ions can help to counter demineralization of tooth enamel which can result from consuming acidic foods, such as water ices.

The oil-based mix and the core produced from it are both oil-continuous. The oil may be any oil which is liquid, or any fat which can be melted, provided that it is in liquid form when it is pumped to the nozzle. For example the oil may be one or more of coconut oil, palm oil, palm kernel oil, cocoa butter, milk fat, sunflower oil, safflower oil, olive oil, linseed oil, soybean oil, rapeseed oil, groundnut oil or mixtures, fractions or hydrogenates thereof. The oil-based mix may contain colours, flavours etc., for example it may be chocolate flavoured. The oil-based mix (and hence the core) may be a water-in-oil emulsion which contains small emulsified droplets of an aqueous phase (i.e. 50µm or less in diameter, preferably smaller than 10µm). The oil-based mix may contain oil-soluble flavours. The oil-based mix may be aerated or unaerated. Preferably the mix is unaerated. Even when the oil-based mix is not a water-in-oil emulsion, it may nonetheless contain emulsifiers, preferably oil-soluble emulsifiers such as mono/di-glycerides, polyglcerol polyricinoleate (PGPR) or lecithin.

Either or both of the aqueous and oil-based mixes may contain other ingredients, such as reactive ingredients. In a preferred embodiment, one mix contains an ingredient which can react with another ingredient in the other mix, for example citric acid and sodium or potassium bicarbonate; or DHA (Docosahexaenoic acid, an omega 3 fatty acid found in fish oils which is sensitive to oxidation) and metal ions.

In another preferred embodiment, the oil-based mix and hence the oil-based core is a (molten) chocolate or chocolate analogue, i.e. a chocolate-like material which contains fats other than cocoa butter (for example coconut oil). Chocolate and chocolate analogues usually contain non-fat cocoa solids, but it is not essential that they do so (e.g. white chocolate). For example, a white chocolate analogue may consist essentially of vegetable oil and sugar, optionally together with colours and / or flavours.

The particles in the frozen confection according to the invention have an average particle size (i.e. mean diameter D(1,0)) of between 1 and 10 mm, preferably between 2 and 7mm, more preferably between 4 and 6mm. Preferably at least 80%, more preferably at least 90% of the particles have diameters within these size ranges. The particles are preferably substantially spherical. The size of the particles depends on a number of factors, including the viscosity and surface tension of the water-continuous phase, and to a lesser extent the flow rate and the nozzle diameter.

The particles may have a single core, or alternatively they may have more than one core. When the particles have a single core, the core is typically from 1 to 4mm, preferably from 1.5 to 3.5mm in diameter (provided of course that the core is smaller than the whole particle). When the particles have more than one core, each core is generally smaller. Nonetheless, the cores are at least 0.1 mm, preferably at least 0.3mm or 0.5mm in diameter. Particles having more than one core can be produced by altering the flow rates of the aqueous and oil-based mixes. The viscosity of the mixes and the interfacial tension between them can also affect the formation of multiple cores.

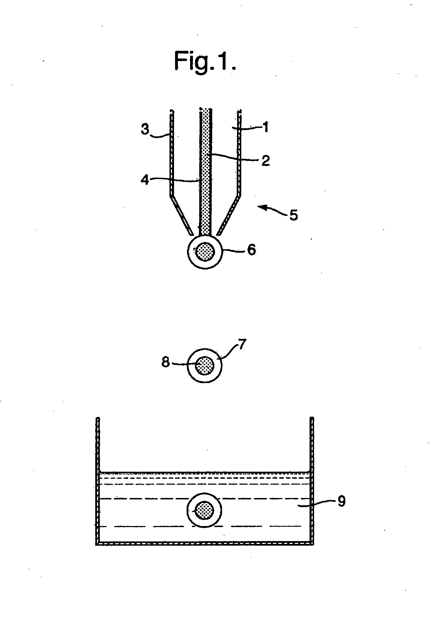

The particles can be prepared by the process shown in Figure 1. The dispensing device 5 consists of two concentric nozzles, 3, 4. The aqueous mix 1 and the oil-based mix 2 are supplied to the outer nozzle 3 and inner nozzle 4 respectively. Typically the mixes are at ambient temperature, although this is not essential. For example, the oil-based mix may be at an elevated temperature in order to keep it molten and not too viscous (depending on the type of oil). The particle 6 having a shell 7 and core 8 is formed by the nozzles. Typically the inner nozzle has a diameter of 1 mm and the outer nozzle has a diameter of 1.5mm. The particles drip from the nozzles into a bath of a cryogenic fluid 9, such as liquid nitrogen, thereby freezing the aqueous shell and forming approximately spherical particles. The frozen particles are then retrieved, for example by using a sieve. In practice, a number of such nozzles can be used in parallel to increase the production rate of the particles.

The proportion of the particle provided by the core can be varied by changing the relative flow rates of the aqueous and oil-based mixes. The total flow rate is preferably not so high that a jet of the mixes is formed at the nozzle rather than a droplet. The formation of a jet results in particles which may be too small. Very low flow rates are preferably also avoided because of the length of time required to form the droplets. Preferably the core constitutes from 5 to 40 wt% of the particles, more preferably from 10 to 30 wt%, such as about 20 wt%.

The core-shell particles thus produced have many applications. For example, the core can be used to contain ingredients which are sensitive to oxidation, thereby protecting them from oxidation. Alternatively the core-shell structure can be used to keep ingredients separate which would otherwise react with each other, for example acid and bicarbonate. When the particles are consumed the core / shell structure breaks down, releasing the ingredients so that they can react with each other when desired, i.e. in the mouth. For example by using acid in the shell and bicarbonate in the core a fizzy sensation can be produced in the mouth. The oil-continuous core can also be used to provide oil-soluble flavours in water ice products. Moreover, the oil-based core can provide texture and flavour contrast with the frozen water-based shell, for example an orange flavoured water ice particle may contain a chocolate core.

A further use of the core-shell particles is to mask unpleasant tasting substances. For example, caffeine and theobromine are known to affect the mood when ingested, and additionally have other beneficial effects like improved brain function, higher alertness, and appetite suppression. Therefore there is a desire to enrich food products with caffeine and theobromine, in order to achieve their beneficial effects. However, these compounds are bitter, which for many consumers is not favourable. By putting the caffeine / theobromine in the core while having a strongly flavoured shell, the bitter taste can be hidden or disguised. A chocolate core is especially suitable for caffeine and theobromine since they are naturally present in cocoa solids. Nonetheless, this principle can be used with any unpleasant tasting substance.

The core-shell particles may be consumed on their own, or alternatively they may be combined with other frozen particles or combined with (e.g. mixed into) frozen confections such as ice cream. For example, core shell particles containing acid and bicarbonate (so that the particles are fizzy on consumption) may be combined with non-fizzy particles of a different flavour to produce an interesting product which provides two different flavours and sensations (fizzy and non fizzy) when eaten.

The present invention will now be further described with reference to the following examples which are illustrative and not limiting.

### Example 1

An aqueous solution having formulation 1A shown in Table 1 was prepared by mixing the ingredients into hot water (80°C) with stirring for 5 minutes. Then the mix was pasteurised at 82°C for 33 seconds and cooled to 5°C until required. The colours, flavours and ice structuring protein were added after pasteurisation.

**Table 1**

| **Ingredient (wt%)** | **1A** | **1B** |
|---|---|---|
| Sucrose | 5.0 | 8.27 |
| Fructose | | 7.21 |
| Lemon juice concentrate | 0.5735 | |
| Pear juice concentrate | | 4.52 |
| Guar gum | 0.75 | 0.5 |
| Lemon-lime flavour | 0.0868 | |
| Flavour | | 0.1 - 0.2 |
| Coconut oil | | 0.8 |
| ISP | | 0.005 |
| Citric acid | 2.25 | 2.25 |
| Aspartame | 0.05 | |
| Water | To 100 | To 100 |

The ISP was recombinant ocean pout type III HPLC-12 produced in yeast essentially as described in WO97/02343.

An oil-continuous mix was prepared by suspending sodium bicarbonate in sunflower oil at a level of 20 wt%.

The aqueous and oil-based mixes (at room temperature) were filled into two syringes which were mounted onto syringe pumps. The outlet of each syringe was connected to the inlets of a concentric nozzle device. The syringe containing the aqueous mix was connected to the inlet for the outer nozzle, and the syringe containing the oil-continuous mix was connected to inlet for the inner nozzle. The diameters of the inner and outer nozzles were 1 mm and 1.5mm respectively. The oil-continuous mix in the syringe was agitated by a magnetic stirrer in order to ensure that the bicarbonate remained in suspension. The mixes were pumped to the nozzle by the syringe pumps. Once the mixes reached the nozzle, core-shell droplets were formed at the nozzle outlet, which then dropped into a Dewar containing liquid nitrogen where they were rapidly frozen (i.e. within about 30 seconds) into approximately spherical particles having a diameter of about 5-6mm. The Dewar was fitted with a sieve to allow easy retrieval of the particles once they had frozen. After retrieval from the Dewar, the frozen particles were stored in a freezer at -18°C.

The relative amounts of oil-based core and water-based shell in the particles could be altered by adjusting the flow rates of the aqueous and oil-continuous mixes. The flow rates to the nozzle were from 0.07 to 2.54 g per minute for the aqueous mix and from 0.02 to 1.06 g per minute for the oil-based mix. For example to make particles with 90% shell and 10% core, the flow rates of the aqueous and oil-based mixes were 1.125 g min -1 and 0.125 g min⁻¹ respectively. Particles were produced in which the core made up 5, 10, 15 and 20 wt% of the particles.

Several variants were produced containing differing amounts of citric acid in the shell and sodium bicarbonate in the core, from 2.25 to 4 wt% and from 10 to 40 wt% respectively.

The example was repeated, this time using an aqueous mix having formulation 1 B shown in Table 1. Several different flavour variants were produced: raspberry, cola, orange (at 0.1 wt% flavour) and lemon (at 0.2 wt% flavour).

On eating the particles provided a refreshing fizzy sensation, due to the reaction between the citric acid and sodium carbonate as the core-shell structure broke down in the mouth.

### Example 2

An aqueous solution having the formulation given in Table 2 was prepared by mixing the ingredients into hot water (80°C) with stirring for 15 minutes. Then the mix was pasteurised and cooled to 5°C until required. The orange flavour was added after pasteurisation.

**Table 2**

| **Ingredient** | **Amount (wt%)** |
|---|---|
| Fructose | 4.86 |
| Salt | 0.1 |
| Aspartame | 0.02 |
| Acesulfame K | 0.02 |
| Guar gum | 0.75 |
| Citric acid | 2.0 |
| Malic acid | 0.2 |
| Orange flavour | 0.10 |
| Beta carotene | 0.02 |
| Orange juice | 40.0 |
| Vitamin mix | 0.38 |
| Mineral mix | 0.089 |
| Water | To 100 |

The oil phase was prepared by dissolving 0.16 % DHA in sunflower oil.

Core-shell particles were produced from these mixes by the process described in example 1. The particles therefore contained vitamins and minerals in the shell and DHA in the core. The core constituted 25% of the particles. The particles were stored for 4 weeks at -10°C. On consumption, there was no fishy off-taste, indicating that the DHA had not been oxidised, because it had been kept separate from the vitamins and minerals (in particular the metal ions).

In an alternative product, particles were produced with DHA in the core, but without vitamins and minerals in the shell. The vitamins and minerals were instead present in separate particles having the formulation given in Table 2, but with no oil-based core. The two types of particles were mixed and stored for 4 weeks at -10°C. Again there was no fishy off-taste when the mixed particles were tasted.

### Example 3

An orange flavour water-continuous mix was prepared as in Example 2, but without the vitamins and minerals. An oil-based mix consisting of sunflower oil containing 0.15% oil-soluble chocolate flavour was also prepared. Particles were produced by the method described in example 1 in which the core constituted 33 wt % of the particle. On eating, initially only the orange flavour was apparent, but as the particle melted, the chocolate flavour was perceived, resulting in a pleasant orange-chocolate flavour.

### Example 4

Particles were prepared having an oil-based core in the form of a water-in-oil emulsion. The aqueous mix for the shell consisted of a solution of 5 wt% fructose and 0.75 wt% guar gum. The oil-based mix was a water-in-oil emulsion made using 0.35% PGPR, 34.65 % sunflower oil and 65 % water. The emulsion was prepared by homogenising the oil-based mix in a Silverson mixer. The core constituted 25 wt % of the particles. The particles were produced by the method described in example 1.

### Example 5

Particles with a chocolate core and a water ice shell were produced. The aqueous mix for the shell was the same as that used in example 4. Chocolate was melted and placed in a heated, temperature-controlled syringe in order to keep it molten. The particles were produced by the method described in example 1.

### Example 6

Core-shell particles having a number of separate cores inside the shell were produced by controlling the flow rates of the aqueous and oil-based mixes. The aqueous mix was the same as that used in example 4, and the oil-based mix was simply sunflower oil. By varying the flow rates, particles having from 1 to 13 cores could be produced. In the particles containing a large number of cores (e.g. 10 or more) the diameter of each core was less than 1 mm, typically about 0.8mm.

### Example 7

An aqueous solution having the formulation given in Table 3 was prepared by mixing the ingredients into hot water (80°C) with stirring for 5 minutes. Then the mix was pasteurised at 82°C for 33 seconds and cooled to 5°C until required. The colours, flavours and ISP (ice structuring protein) were added after pasteurisation.

**Table 3**

| **Ingredient** | **Amount (wt%)** |
|---|---|
| Sucrose | 11.0 |
| Citric acid | 2.1 |
| Guar gum | 0.5 |
| Coconut oil | 0.8 |
| Fructose | 7.5 |
| Emulsifier HP60 | 0.2 |
| Calcium sulphate | 0.4 |
| ISP III HPLC 12 | 0.005 |
| Raspberry flavour | 0.1 |
| Red colour | 0.2 |
| Water | To 100 |

The emulsifier was HP60, a saturated fatty acid mono-diglyceride containing 60% monoglyceride, supplied by Danisco.

An oil-continuous mix was prepared by dissolving 0.1 wt% vanillin in sunflower oil and then suspending potassium bicarbonate in this at a level of 20 wt%. Particles were produced by the method described in example 1 in which the core constituted 13.5 wt % of the particle.

### Example 8

Two aqueous solutions having the formulations given in Table 4 were prepared by mixing each set of ingredients into hot water (80°C) with stirring for 5 minutes. Then each mix was pasteurised at 82°C for 33 seconds and cooled to 5°C until required. The colours, flavours and ISP were added after pasteurisation in each case.

**Table 4**

| **Ingredient (wt%)** | **Mix A** | **Mix B** |
|---|---|---|
| Sucrose | 11.0 | 11.0 |
| Citric acid | 4.0 | 0.375 |
| Malic acid | | 0.125 |
| Guar gum | 0.5 | 0.5 |
| Coconut oil | 0.8 | 0.8 |
| Fructose | 7.5 | 7.5 |
| Emulsifier HP60 | 0.2 | 0.2 |
| Calcium sulphate | 0.4 | 0.4 |
| ISP III HPLC 12 | 0.005 | 0.005 |
| Lemon flavour | 0.25 | |
| Yellow colour | 0.6 | |
| Lime juice concentrate | | 4.0 |
| Green colour | | 0.065 |
| Water | To 100 | To 100 |

Core-shell particles were produced by the method described in example 1 using Mix A as the aqueous phase and a 20wt% suspension of sodium bicarbonate in sunflower oil as the oil phase. The oil-based core constituted 20wt % of the particle. The resulting particles were fizzy on consumption due to the reaction between the acid in the aqueous phase and the bicarbonate in the oil phase. Conventional (i.e. single phase) water ice particles were prepared by dripping Mix B into liquid nitrogen. Products were assembled by mixing 40wt% of the lemon flavoured fizzy core-shell particles with 60 wt% of the non fizzy lime flavoured water ice particles. The products produced a pleasant fizzy lemon / lime experience on consumption.

## Claims

1. A frozen confection comprising frozen particles having an average diameter of from 1 to 10mm and comprising from 1 to 50 wt% of an oil-based core and from 50 to 99 wt% of a frozen aqueous shell.

2. A frozen confection according to claim 1 wherein the frozen aqueous shell is a water ice.

3. A frozen confection according to claim 1 or claim 2 wherein the oil-based core comprises an oil selected from coconut oil, palm oil, palm kernel oil, cocoa butter, milk fat, sunflower oil, safflower oil, olive oil, linseed oil, soybean oil, rapeseed oil, groundnut oil and mixtures, fractions or hydrogenates thereof.

4. A frozen confection according to any of claims 1 to 3 wherein the core constitutes from 5 to 40 wt% of the particles.

5. A frozen confection according to any of claims 1 to 4 wherein the aqueous shell contains an ingredient which can react with another ingredient which is contained in the oil-based core.

6. A frozen confection according to any of claims 1 to 5 wherein the particles have an average diameter of between 2 and 7 mm.

7. A frozen confection according to any of claims 1 to 6 wherein the oil-based core is a chocolate or chocolate analogue.

8. A frozen confection according to any of claims 1 to 6 wherein the oil-based core is a water-in-oil emulsion.

9. A frozen confection according to any of claims 1 to 8 wherein the aqueous shell is an oil-in-water emulsion.

10. A frozen confection according to any of claims 1 to 9 wherein the particles each have one core having a diameter of from 1 to 4mm.

11. A frozen confection according to any of claims 1 to 9 wherein each particle has more than one core.

12. A process for preparing a particulate frozen confection according to any of claims 1 to 11, the process comprising:
(a) providing a dispensing device having an inner nozzle and an outer nozzle which surrounds the inner nozzle;
(b) supplying an aqueous mix to the outer nozzle and an oil-based mix to the inner nozzle, thereby forming particles with a water-continuous shell and an oil-continuous core, and then
(c) dropping the particles into a refrigerant to freeze the water-continuous shell.

## Patentansprüche

1. Gefrorenes Konfekt,
das gefrorene Teilchen mit einem mittleren Durchmesser von 1 bis 10 mm aufweist und 1 bis 50 Gew.-% eines auf Öl basierenden Kerns und 50 bis 99 Gew.-% einer gefrorenen wässrigen Hülle aufweist.

2. Gefrorenes Konfekt nach Anspruch 1,
wobei die gefrorene wässrige Hülle ein Wassereis ist.

3. Gefrorenes Konfekt nach Anspruch 1 oder 2,
wobei der auf Öl basierende Kern ein Öl aufweist, das aus Kokosöl, Palmöl, Palmkernöl, Kakaobutter, Milchfett, Sonnenblumenöl, Färberdistelöl, Olivenöl, Leinöl, Sojaöl, Rapsöl, Erdnussöl und Gemischen, Fraktionen oder gehärteten Produkten davon besteht.

4. Gefrorenes Konfekt nach einem der Ansprüche 1 bis 3,
wobei der Kern 5 bis 40 Gew.-% der Teilchen ausmacht.

5. Gefrorenes Konfekt nach einem der Ansprüche 1 bis 4,
wobei die wässrige Hülle ein Bestandteil enthält, der mit einem anderen Bestandteil reagieren kann, der im auf Öl basierenden Kern enthalten ist.

6. Gefrorenes Konfekt nach einem der Ansprüche 1 bis 5,
wobei die Teilchen einen mittleren Durchmesser von 2 bis 7 mm aufweisen.

7. Gefrorenes Konfekt nach einem der Ansprüche 1 bis 6,
wobei der auf Öl basierende Kern Schokolade oder ein Schokolade-Analogon ist.

8. Gefrorenes Konfekt nach einem der Ansprüche 1 bis 6,
wobei der auf Öl basierende Kern ein Wasser-in-Öl-Emulsion ist.

9. Gefrorenes Konfekt nach einem der Ansprüche 1 bis 8,
wobei die wässrige Hülle eine Öl-in-Wasser-Emulsion ist.

10. Gefrorenes Konfekt nach einem der Ansprüche 1 bis 9,
wobei die Teilchen jeweils einen Kern mit einem Durchmesser von 1 bis 4 mm aufweisen.

11. Gefrorenes Konfekt nach einem der Ansprüche 1 bis 9,
wobei jedes Teilchen mehr als einen Kern aufweist.

12. Verfahren zum Herstellen eines teilchenförmigen gefrorenen Konfekts nach einem der Ansprüche 1 bis 11,
wobei das Verfahren Folgendes aufweist:
(a) Bereitstellen einer Verteilervorrichtung mit einer inneren Düse und einer äußeren Düse, die die innere Düse umgibt;
(b) Zuführen eines wässrigen Gemischs zu der äußeren Düse und eines auf Öl basierenden Gemischs zu der inneren Düse, wodurch Teilchen mit einer Hülle mit Wasser als kontinuierlicher Phase und einem Kern mit Öl als kontinuierlicher Phase erzeugt werden, und danach
(c) Tropfen der Teilchen in ein Kältemittel, damit die Hülle mit Wasser als kontinuierlicher Phase gefriert.

## Revendications

1. Confiserie glacée comprenant des particules glacées présentant un diamètre moyen de 1 à 10 mm et comprenant de 1 à 50 % en poids d'un noyau à base d'huile et de 50 à 99 % en poids d'une enveloppe aqueuse glacée.

2. Confiserie glacée selon la revendication 1, dans laquelle l'enveloppe aqueuse glacée est une glace à l'eau.

3. Confiserie glacée selon la revendication 1 ou la revendication 2, dans laquelle le noyau à base d'huile comprend une huile choisie parmi l'huile de noix de coco, l'huile de palme, l'huile de noyau de palme, le beurre de cacao, une graisse de lait, l'huile de tournesol, l'huile de colza, l'huile d'olive, l'huile de lin, l'huile de soja, l'huile de colza, l'huile d'arachide et des mélanges, fractions ou hydrogénats de celles-ci.

4. Confiserie glacée selon l'une quelconque des revendications 1 à 3, dans laquelle le noyau constitue de 5 à 40 % en poids des particules.

5. Confiserie glacée selon l'une quelconque des revendications 1 à 4, dans laquelle l'enveloppe aqueuse contient un ingrédient qui peut réagir avec un autre ingrédient qui est contenu dans le noyau à base d'huile.

6. Confiserie glacée selon l'une quelconque des revendications 1 à 5, dans laquelle les particules présentent un diamètre moyen de 2 à 7 mm.

7. Confiserie glacée selon l'une quelconque des revendications 1 à 6, dans laquelle le noyau à base d'huile est un chocolat ou un analogue de chocolat.

8. Confiserie glacée selon l'une quelconque des revendications 1 à 6, dans laquelle le noyau à base d'huile est une émulsion eau-dans-huile.

9. Confiserie glacée selon l'une quelconque des revendications 1 à 8, dans laquelle l'enveloppe aqueuse est une émulsion huile-dans-eau.

10. Confiserie glacée selon l'une quelconque des revendications 1 à 9, dans laquelle les particules présentent chacune un noyau présentant un diamètre de 1 à 4 mm.

11. Confiserie glacée selon l'une quelconque des revendications 1 à 9, dans laquelle chaque particule présente plus d'un noyau.

12. Procédé de préparation d'une confiserie glacée particulaire selon l'une quelconque des revendications 1 à 11, le procédé comprenant :
(a) la fourniture d'un dispositif de distribution présentant une buse interne et une buse externe qui entoure la buse interne ;
(b) l'introduction d'un mélange aqueux dans la buse externe et d'un mélange à base d'huile dans la buse interne, formant par-là des particules avec une enveloppe continue dans l'eau et un noyau continu dans l'huile, et ensuite
(c) la chute des particules dans un réfrigérant pour geler l'enveloppe continue dans l'eau.
